# EUROPEAN PATENT APPLICATION

(11) **EP 1 239 415 A1**
(43) Date of publication of application: **11.09.2002**
(21) Application number: 01301952.6
(22) Date of filing: 05.03.2001
(51) Int. Cl.: G06T 5/40

(54) **Method and system of management of the dynamics of a digitized radiological image**

(71) Applicant: GE MEDICAL SYSTEMS SA, 78533 Buc Cedex (FR)
(72) Inventor: Lienard, Jean, 92140 Clamart (FR); Lebihen, Thierry, 75013 Paris (FR); Langan, David Allen, Clifton Park, New York 12065 (US); Braconnier, Olivier Lion Jean, 75002 Paris (FR)
(74) Representative: Goode, Ian Roy

(57) **Abstract**

Method and apparatus for the management of the dynamics of a digitized radiological image of the type comprising a radiation source and a means of detection of the radiation source after it has crossed an object of interest, the means of detection capable of converting the radiation source into a digital electronic signal, including means (10) for defining an intensity threshold from a so-called digitized input image, means (11) for deducing therefrom an algebraic compensation image to raise the pixels of level below the threshold, and means (12) for adding the input image and the compensation image, in order to obtain a compensated image which preserves the differences and the real relations between internal structures of the object of interest. The method and apparatus is useful in X-ray radiological imaging of internal organs of the human body.

## Description

The present invention concerns the field of radiological imaging, which makes it possible to visualize an object or an organ or part of an organ, generally of the human body.

Radiography is conventionally carried out with sensitive films exposed by X-rays after they cross the organs to be studied. Radiologists have been trained in the interpretation of such images. The new imaging technologies - solid state detector and digital acquisition system - must be adapted to common practices and must provide an equivalent perception of the pertinent information that radiologists are accustomed to examining. In particular, one of the requirements that digital systems must satisfy consists of a range of gray level dynamics simulating a conventional film as faithfully as possible. For that purpose, the digital image is displayed on a screen that the radiologist adjusts interactively in order to identify all the clinical signs by perceiving the relations between the different image components. But the precise perception of density information by means of the image displayed on the screen is limited by the dynamics of the screen. Now, one must pass automatically from the high contrast of the original image, for example, in the order of 30 to 50, to the low contrast offered by a video screen.

Physicians commonly apply configuration techniques to patients with a view to limiting the dynamics of acquired images, for example, by compression of thick regions and/or by addition of absorbent substances in order to compensate for thin zones. In the case of X-ray mammography, the breast is compressed to the smallest and most constant possible thickness. In the field of cardiology contour filters are used to avoid problems associated with weakly absorbent zones of the chest, such as the lungs. Those filters consist of plates of shape complementing that of the heart, made of materials of given X-ray absorption coefficients. However, these techniques prove cumbersome to use and sometimes uncomfortable for the patient.

The present invention is intended to remedy the above-mentioned problems.

An embodiment of this invention manages the dynamics of an image, particularly at the limit between high-density regions and low-density regions of the organ X-rayed.

In accordance with the invention, a method of management of the dynamics of a radiological image is designed for an X-ray apparatus of the type comprising an X-ray source and a means of detection of the X-ray beam after it has crossed the organ, the means of detection being capable of converting the X-ray beam into a digital electronic signal. From a so-called digitized input image, an intensity threshold is defined, an algebraic compensation is deduced therefrom, making it possible to raise the pixels of level below the threshold, and the input image and compensation image are added together to obtain a compensated image which preserves the differences and the real relations between the anatomical structures.

In an embodiment of the invention, the algebraic compensation image makes it possible to lower the pixels of level above the threshold.

In an embodiment of the invention, the visible contrast of objects of interest in the image is preserved.

In an embodiment of the invention, the dynamics of the objects of interest are reduced locally in high-intensity zones.

The input image is advantageously processed by a low-pass filtering.

In an embodiment of the invention, the filtered image is processed according to a table prerecorded for obtaining the compensation image.

In another embodiment of the invention, an image resulting from a weighted sum of the input image and the filtered image is processed according to a predetermined table, in order to obtain the compensation image. The weighting can be calculated for each pixel, depending on the value of the pixel in the input image and in the filtered image and on a prerecorded table.

In an embodiment of the invention, the compensated image is processed according to a prerecorded table.

The invention also concerns a system of management of the dynamics of an image in an X-ray apparatus, of the type comprising an X-ray source and a means of detection of the X-ray beam after it has crossed the organ, the means of detection being capable of converting the X-ray beam into a digital electronic signal. The system includes a means for defining an intensity threshold from a so-called digitized input image, a means for deducing therefrom an algebraic compensation image making it possible to raise the pixels of level below the threshold, and a means for adding the input image and the compensation image, in order to obtain a compensated image which preserves the differences and the real relations between the anatomical structures.

In an embodiment of the invention, the algebraic compensation image also makes it possible to lower the pixels of level above the threshold.

In an embodiment of the invention, the system includes a means for locally reducing the dynamics of the objects of interest in high-intensity zones.

The means for defining an intensity threshold from a so-called digitized input image advantageously includes a low-pass filter. In an embodiment of the invention, the means for deducing an algebraic compensation image includes a prerecorded table.

In another embodiment of the invention, the system includes a predetermined table capable of processing an image resulting from a weighted sum of the input image and the filtered image, in order to obtain the compensation image.

The system can include a means of calculation weighted for processing each pixel according to the value of the pixel in the input image and in the filtered image and to a prerecorded weighting table.

In an embodiment of the invention, the system includes a prerecorded table for processing the compensated image.

Thus, the invention offers an image processing supplying an image equivalent to that which would be obtained by using an absorbent liquid on the edges of the organ over a part of their height and makes it possible to simulate a physical phenomenon, which provides a better understanding of the optimal adjustment of the parameters that has to be made. This image processing confers a natural and pleasing appearance to the different tissues of the organ studied. The method can be applied to the X-ray of any organ at all and is particularly well suited to X-ray machines including a solid state detector. This type of detector performs a digital acquisition of high-dynamic images with a view to a subsequent digital processing. Configuration techniques of mechanical type can be eliminated and replaced by a method of management of dynamics which is used in an image processing chain.

The present invention will be better understood by studying the detailed description of an embodiment taken by way of non-limitative example and illustrated by the attached drawings, in which:
Figure 1 is a schematic representation of an organ composed of zones of different thicknesses;
Figure 2 is a schematic representation of an organ composed of zones of different compensated thicknesses;
Figure 3 is a schematic view of a system of an embodiment of the invention;
Figure 4 is a schematic view of a system of another embodiment of the invention;
Figure 5 is a schematic view of a system of another embodiment of the invention; and
Figure 6 is a schematic view of a complement to Figure 5.

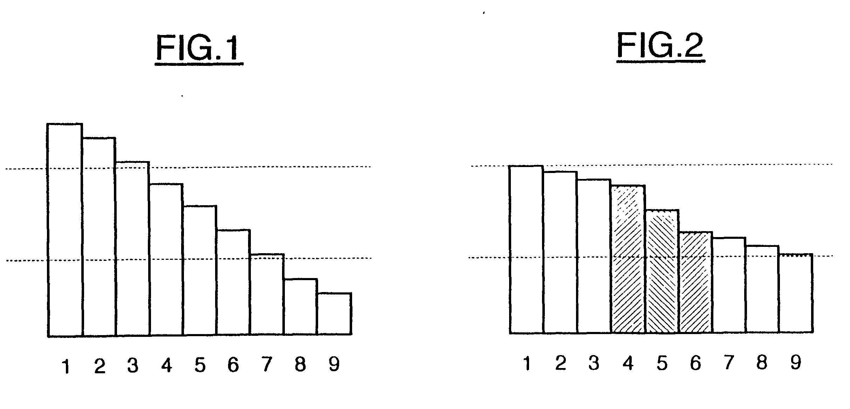

As can be seen in Figure 1, the dynamics of an image of an organ can exceed the dynamics of thicknesses representable by the display screen and represented by the two horizontal dotted lines. Thus, blocks 1 to 3 are at too high a gray level, while blocks 8 and 9 are at too low a level. The physical phenomena or parts of the organ found in such zones are therefore not satisfactorily displayed. By maintaining the same screen dynamics, it is conceivable, first of all, to display blocks 1 to 4, then, secondly and after modification of the luminosity parameters of the screen, blocks 5 to 9. By taking the example of the mammogram, a first image would be obtained, on which only the contour of the breast would be seen, without viewing its internal tissues. The second image would show solely its internal tissues, adipose zone or glandular zone, without its contour being perceived, which is hardly practical and complicates the work of the radiologist.

In an embodiment of the present invention, the digital compensation of the crude image is based on the following principle: the image compensation process increases or reduces the intensity of the image by an appropriate quantity in the boundary regions, for example, between zones of high absorption and zones of low absorption of X-rays, so that the dynamics are reduced, while taking into account the constraint of preservation of the difference and real relations between the anatomical structures.

Thus, it can be seen that in Figure 2, blocks 1 to 9 are contained within the limits of the screen dynamics. Blocks 1 to 3, instead of being white-saturated, are brought back just below the upper limit of saturation and preserve their original relation, namely: block 1 lighter than the block 2 lighter than the block 3, etc. The same is true for blocks 8 and 9 which, instead of being black, are situated in proximity to the lower limit of the dynamics, so as to be visible and, while preserving their original difference, block 7 lighter than the block 8 lighter than the block 9.

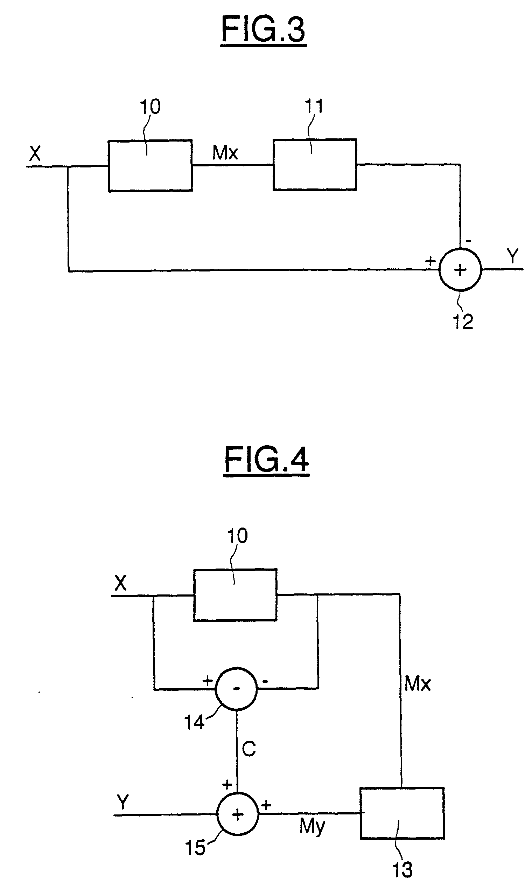

As can be seen in Figure 3, an application of the system according to the invention includes a filter 10 of low-pass type for receiving the pixels X of an input image and supplying on output pixels filtered or of input mask Mₓ, an operator 11 placed downstream from the filter 10 and performing a function noted f, and a summator-subtractor 12 placed downstream from the operator 11 and receiving the pixels of the input image. An image transformation is thus made. The pixels of the output image are noted Y, with Y = X - f(Mₓ). The function f of the operator 11 is a monotone function with variable slope in order to simulate the addition or removal of an appropriate quantity of material in different regions, so that the dynamics of the image will be reduced, while preserving the real relations between the anatomical structures.

In other words, if a particular pixel Xₙ is of gray level higher than a pixel Xₘ and lower than a pixel Xₚ, the same relation will exist between the output pixels: Yₘ<Yₙ<Yₚ. The dynamics of an image is thus reduced in a proportion which will depend on the dynamics of an input image sent by a digital detector and the dynamics of an output image, so that the display means are capable of making it available to a user. The different processings are carried out on so-called "intensity" images, that is, in which the value of each pixel is representative of the intensity of the X-rays received and not of the thickness of the material crossed by the X-rays.

The application of the system according to the invention illustrated in Figure 4 incorporates a filter 10 of low-pass type for receiving the pixels X of an input image and supplying on output filtered pixels Mₓ, an operator 13 placed downstream from the filter 10 and performing a function noted g with the filtered output pixels My = g(Mₓ), a summator-subtractor 14 receiving the input pixels X and the filtered pixels Mₓ and supplying on its output contrast pixels Cₓ with Cₓ = X- Mₓ, and a summator-adder 15 placed downstream from the operator 13 and summator-subtractor 14 and receiving the contrast pixels Cₓ and pixels My. The contrast pixels Cₓ are also called structure pixels, for they make it possible to visualize the principal anatomical structures.

The output pixels Y downstream from the summator-adder 15 are written Y = Cₓ + My. Here the contrast pixels Cₓ are not processed by an operator, resulting in preservation of the contrast, which corresponds to C_{y} = Cₓ.

From equations
(1) Cₓ = X - Mₓ and
(2) Y = Cₓ + M_{y}, one deduces
(3) Y = X - (Mₓ - M_{y}).

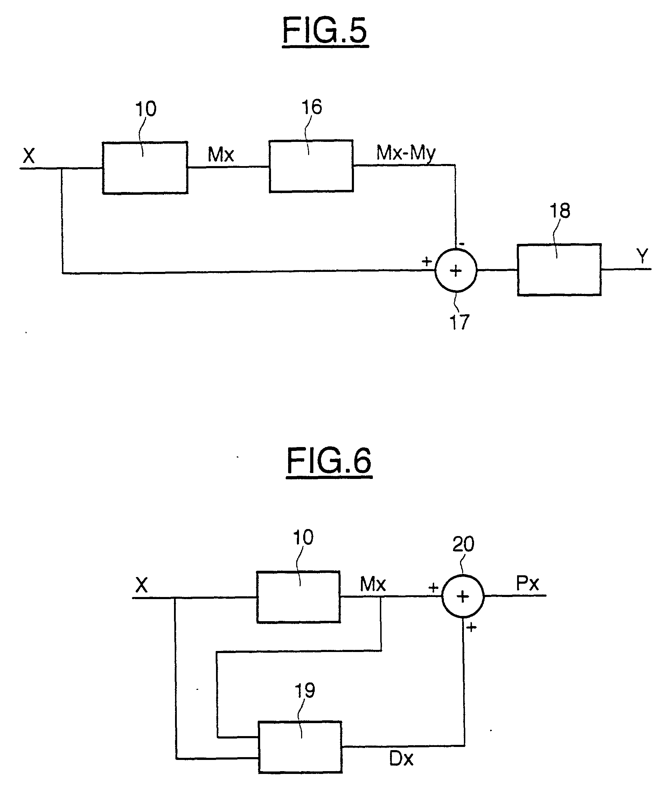

For reasons of implementation, it proves advantageous to calculate the term (Mₓ - My) by means of a single operator noted 16 in Figure 5 and making the transformation of Mₓ into (Mₓ - My) by means of a prerecorded table. A summator-subtractor 17 receives the input pixels X and the transformed pixels (Mₓ - M_{y}) in order to calculate the term

X - (Mₓ - M_{y}), which is processed by an operator 18 performing a nonlinear function h by means of a prerecorded table in order to obtain the output pixels Y with Y = h(X - (Mₓ - My)). The dynamics can thus be reduced by raising the pixels of lower level to a first threshold and possibly by lowering the pixels of higher level to a second threshold higher than or equal to the first threshold.

However, it is of interest to weight the reduction of dynamics made in order to prevent small-sized structures not appearing on the filtered image of pixels Mₓ, such as blood vessels loaded with contrast medium, from being represented with potentially negative gray levels. For example, if a light zone of the image has an average level of 200 with a darker small-sized structure of level 30, Mₓ = 200 will generally be present for the zone. Let us now assume that the reduction of dynamics made lowers the gray level by 50 on the zone. There will theoretically be gray levels in the order of -20 for the small-sized structure, which is unsatisfactory.

To overcome this potential defect, a subsystem illustrated in Figure 6 is added to the system illustrated in Figure 5. The subsystem includes a prerecorded table 19 which receives the input pixels X and the filtered pixels Mₓ in order to supply on output pixels of value Dₓ = (1 - K)*(X - Mₓ) and a summator-adder 20 placed downstream from the table 19 and the filter 10 already provided in the previous embodiment. On output of the summator-adder 20, there are weighted pixels Pₓ, with Pₓ = Dₓ + Mₓ = (1 - K)*(X - Mₓ) + Mₓ or even Pₓ = (1 - K) * X + K * Mₓ.

The weighted pixels Pₓ are then sent to the operator 16 of Figure 5. Factor K is constant for a given value of the pair X ; Mₓ. The correction values Dₓ of Mₓ correspond to values of factor K. They are stored in the table 19. For example, if X and Mₓ are coded on 12 bits each, 4096*4096 correction values Dₓ will be stored. Another more complicated approach would consist of modifying the law of filtering of the filter 10.

On development of the system, and normally once and for all, the values of Dₓ are calculated for each value of the pair X ; Mₓ. First of all, Cy is calculated for Dₓ = O, and then by successive iterations it is sought to obtain the equality C_{y} = Cₓ by modifying Dₓ on each iteration. Thus, weighting is permanently adaptive as a function of the processed pixel X and of the neighboring pixels whose mean is Mₓ. To speed up the calculation, one may start not from Dₓ = 0, but from a value of Dₓ previously calculated for a pair X ; Mₓ close to that for which the calculation is made.

One can also calculate the output contrast Cy for Dₓ = 0, Dₓ = -Mₓ. Dₓ = Mₘₐₓ - Mₓ, and then by successive iterations seek to obtain the equality C_{y} = Cₓ by modifying Dₓ on each iteration, Mₘₐₓ being the maximum possible value of Mₓ.

Somewhat different laws can also be provided, for example, to amplify weak contrasts in the case of hardly visible implants (stents) or to preserve strong contrasts. It is then sufficient to use another table giving the correction Dₓ according to X ; Mₓ.

In an embodiment of the invention, a method and a system of image processing are provided, capable of simulating a physical operation of arrangement of an absorbent liquid, which makes possible an easy understanding of its action. The image obtained according to the method does not present any artifact and is of natural appearance. The method can be used in varied fields of radiology, while eliminating the need for physical compensation devices.

The method and system of image processing are perfectly well suited to digital acquisition and processing of radiographic images and manage the dynamics of the images automatically in a processing chain arranged between the digital detector and display means such as monitors, printers, etc. The invention makes possible a better visualization of the blood vessels of an organ of a living being, particularly in dark zones. The contrast is managed by means of a prerecorded table and can be easily modified on demand.

## Claims

1. A method of management of the dynamics of a digitized radiological image comprising a radiation source and a means of detection of the radiation source after it has crossed an object of interest, the means of detection being capable of converting the X-ray beam into a digital electronic signal, in which, from a so-called digitized input image, an intensity threshold is defined, an algebraic compensation image is deduced therefrom to raise the pixels of level below the threshold, and the input image and the compensation image are added together, in order to obtain a compensated image which preserves the differences and the real relations between internal structures of the object.

2. The method according to claim 1, in which the algebraic compensation image lowers the pixels of level above the threshold.

3. The method according to claim 1 or 2, in which the visible contrast of objects of interest in the image is preserved.

4. The method according to any one of the foregoing claims, in which the dynamics of the objects of interest are reduced locally in high-intensity zones.

5. The method according to any one of the foregoing claims, in which the input image is processed by a low-pass filtering.

6. The method according to claim 5, in which the filtered image is processed according to a prerecorded table in order to obtain the compensation image.

7. The method according to claim 5, in which an image resulting from a weighted sum of the input image and filtered image is processed according to a predetermined table, in order to obtain the compensation image.

8. The method according to claim 7, in which the weighting is calculated for each pixel as a function of the value of the pixel in the input image and in the filtered image and of a prerecorded table.

9. The method according to any one of the foregoing claims, in which the compensated image is processed according to a prerecorded table.

10. An apparatus for the management of the dynamics of a digitized radiological image comprising a radiation source and a means of detection of the radiation source after it has crossed an object of interest, the means of detection capable of converting the radiation source into a digital electronic signal, comprising means (10) for defining an intensity threshold from a so-called digitized input image, means (11) for deducing therefrom an algebraic compensation image to raise the pixels of level below the threshold, and means (12) for adding the input image and the compensation image, in order to obtain a compensated image which preserves the differences and the real relations between internal structures of the object of interest.
